# FASCICULE DE BREVET EUROPEEN

(11) **EP 2 325 737 B1**
(45) Date de publication et mention de la délivrance du brevet: **08.05.2019**
(21) Numéro de dépôt: 10188375.9
(22) Date de dépôt: 21.10.2010
(51) Int. Cl.: G06F 3/048

(54) **Procédé et système de gestion d'une interface graphique pour l'affichage de composants graphiques applicatifs**
Method and apparatus for gesture based input into a graphical user interface for displaying application windows
Verfahren und Vorrichtung zur gestenbasierten Eingabe in eine graphische Benutzeroberfläche zur Anzeige von Anwendungsfenstern

(30) Priorité: 28.10.2009 FR 0957580
(43) Date de publication de la demande: 25.05.2011
(73) Titulaire: Orange, 75015 Paris (FR)
(72) Inventeur: Coldefy, François, 22300, Lannion (FR); Belatar, Mohammed, Safi (MA)
(74) Mandataire: Regimbeau

(56) Documents cités:
- EP-A1- 2 101 253
- US-A1- 2007 180 400
- US-A1- 2008 168 403
- US-A1- 2009 109 187

## Description

La présente invention concerne la gestion d'une interface graphique utilisateur comprenant des composants graphiques applicatifs, tels que des fenêtres d'applications informatiques ou autre composant d'une application.

Dans le domaine informatique, une interface graphique utilisateur est généralement formée d'un ensemble d'éléments graphiques, généralement sous forme de pixels, qui est affiché sur un dispositif de visualisation d'un équipement électronique, et avec lequel un ou plusieurs utilisateurs peuvent interagir au moyen de périphériques appropriés. Il est courant de réaliser une telle interface graphique utilisateur au travers d'un dispositif de visualisation du type écran d'ordinateur, équipement mobile (tel qu'un téléphone), table ou tablette interactive, écran tactile, tableau blanc ou encore mur interactif.

Aussi bien lors d'un usage mono-utilisateur qu'un usage multi-utilisateurs (où l'interface graphique est partagée simultanément entre plusieurs utilisateurs), plusieurs composants graphiques applicatifs correspondant à plusieurs applications informatiques peuvent coexister, côte à côte par exemple, en même temps sur l'interface, d'autant plus nombreux que l'interface est de grande dimension.

Chaque application est représentée par un ou plusieurs composants graphiques applicatifs, ou "*fenêtres*", dédiés à l'affichage de tout ou partie du logiciel applicatif, comme par exemple une fenêtre Windows (nom commercial), un navigateur web, un document dans une application d'édition ou de visionnage, un gadget logiciel (ou *"widget*"), etc. Ces fenêtres s'affichent généralement dans un environnement informatique appelé l'interface graphique utilisateur (GUI) associée à un système d'exploitation (OS) et qui correspond généralement à l'espace numérique de travail des utilisateurs appelé "bureau". Un exemple d'interface est présenté dans le document "*Interacting with Large Displays from a Distance with Vision-Tracked Multi-Finger Gestural Input*" de Malik, Ranjan et Balakrishnan.

De façon bien connue par tous les praticiens, le lancement, ou *"ouverture",* d'une nouvelle application aboutit à la création d'une nouvelle fenêtre sur l'interface graphique. Ce lancement est généralement réalisé par une action de l'utilisateur (clic sur une icône, sur un bouton représentatif de l'application voire sur un document à visualiser ou à éditer, sélection dans un menu ou raccourci clavier) qui génère une commande d'ouverture de l'application. En réponse à cette commande, une fenêtre applicative est ouverte sur l'interface graphique et s'affiche sur le "bureau", par exemple en plein écran ou à un emplacement par défaut.

Toutefois, ces mécanismes prévus pour le lancement d'applications génèrent des composants graphiques applicatifs sur une interface graphique utilisateur, sans contrôle précis du positionnement de ceux-ci ou de leur dimensionnement.

Des risques de chevauchement avec d'autres fenêtres applicatives existent alors, de même qu'une inadéquation possible entre les dimensions d'affichage de la fenêtre et les souhaits de l'utilisateur. Ce dernier doit alors déplacer la fenêtre à l'endroit voulu (pour éviter par exemple des chevauchements de fenêtres), éventuellement la tourner pour l'orienter selon une direction particulière (dans le cas par exemple d'une tablette interactive tout autour de laquelle les utilisateurs ont accès), et éventuellement la redimensionner pour ne pas qu'elle empiète sur ses autres fenêtres applicatives, ou encore pour optimiser sa surface de visualisation relativement à la place disponible.

Il en résulte un grand nombre d'opérations de manipulation pour l'utilisateur afin d'être en situation d'utiliser efficacement les applications lancées. Or, la succession de ces opérations tend à réduire la vitesse d'interaction de l'utilisateur avec le système.

En outre, dans une configuration multi-utilisateurs, il existe un risque de gêne des utilisateurs voisins pouvant provoquer des interruptions d'utilisation pour ceux-ci. En effet, lorsque l'on veut ouvrir des documents ou lancer une nouvelle application, on cherche à ne pas entraver les autres utilisateurs par un chevauchement de fenêtres.

Par ailleurs, lorsqu'un utilisateur, par une sélection dans un menu, action peu perceptible par les autres utilisateurs du même dispositif, provoque l'ouverture brusque et non contrôlée dans son positionnement d'une fenêtre, les autres utilisateurs sont généralement perturbés car ils n'ont pas perçu la cause de l'ouverture. Ainsi, ceux-ci peuvent penser à tort qu'ils ont provoqué par erreur cette soudaine apparition de la fenêtre.

Dans ce contexte multi-utilisateurs, la gestion de l'espace d'interaction entre les utilisateurs revêt donc une importance certaine.

Il existe donc un besoin d'amélioration de la gestion du lancement d'applications ou l'ouverture d'une composant graphique dédié quelconque pour offrir à l'utilisateur un positionnement, une dimension et/ou une orientation de la fenêtre nouvellement ouverte adaptés à l'état d'occupation de l'espace d'affichage, de sorte à conserver une vue acceptable des autres fenêtres déjà ouvertes sur le "bureau" et/ou à ne pas perturber un autre utilisateur du même dispositif d'affichage.

On connaît la technologie Tom Windows Manager (nom commercial, http://www.x.org/archive/X11R6.8.2/doc/twm.1.html), ou TWM, qui permet, à partir d'une application choisie dans un menu, de positionner et ouvrir, sur une interface, une fenêtre applicative correspondante en choisissant un premier point et en faisant glisser la souris jusqu'à un autre point constituant le sommet opposé de la fenêtre à afficher. Bien que cette technologie permette un positionnement et un dimensionnement plus précis de la fenêtre pour un utilisateur, elle présente cependant quelques limitations, dont notamment :
- elle est mise en oeuvre uniquement sur des interfaces mono-utilisateurs, dont l'écran d'affichage est orienté;
- elle nécessite l'ouverture préalable d'un menu et rend définitive l'affectation de l'application sélectionnée dans ce menu à la fenêtre en cours de construction;
- elle est dédiée exclusivement à l'ouverture de fenêtres applicatives;
- elle limite l'utilisation de l'espace graphique en zones rectangulaires.

Il existe ainsi également un besoin d'améliorer l'interaction de l'utilisateur avec une interface graphique utilisateur agencée pour comprendre des composants graphiques applicatifs, un composant graphique applicatif affichant une fonction applicative associée.

Il a pu ainsi être prévu les étapes consistant à :
- tracer, sur l'interface, une forme graphique de sorte à créer un composant graphique, puis
- associer une fonction applicative audit composant graphique créé pour affecter le composant graphique à l'affichage de ladite fonction applicative.

On entend par *"fonction applicative*" tout composant/élément d'un ensemble numérique applicatif qui peut avoir une fonction et une apparence déterminées. A titre d'exemple, il peut s'agir de l'application (logiciel) elle-même à laquelle correspond une fenêtre classique comme évoquée précédemment, mais également des boîtes à outils prévues dans une telle application, des bulles de commentaires sur un composant graphique d'une fenêtre, des boutons ou zones de texte dans un éditeur graphique, etc.

Dans ce cas, l'utilisateur dessine, sur le dispositif d'affichage, la forme du composant graphique pour l'application ou l'élément de l'application, à l'endroit exactement où il souhaite le voir s'afficher, et dans les dimensions correspondantes d'affichage, notamment quant à sa forme, sa position, son orientation et son sens de lecture comme décrit par la suite. A ce stade, le composant graphique est indifférencié, c'est-à-dire qu'il n'est pas associé à une application particulière. Un choix de l'application à associer peut alors être mené, puis l'application est associée à ce composant graphique dessiné de sorte à former une interface utilisateur de l'application.

Comparé aux techniques connues, la création du composant graphique, certes indifférencié, est, dans cette configuration, antérieure au choix de l'application. Cette interversion des étapes permet en particulier de diminuer le nombre de manipulations pour l'utilisateur pour améliorer l'interaction et également d'accélérer le processus d'ouverture d'applications dans des conditions efficaces d'utilisation de l'espace d'interaction.

Par ailleurs, le tracé de la forme graphique par l'utilisateur garantit une utilisation optimale de l'espace d'affichage dès l'ouverture de l'application, du fait que l'utilisateur tient compte des autres fenêtres ouvertes et de l'espace disponible lors de son tracé. Il est ainsi aisé de ne pas perturber les autres utilisateurs.

Enfin, ces derniers, dès lors qu'ils observent l'utilisateur dessiner sur l'interface graphique, peuvent percevoir immédiatement la cause de l'apparition d'un nouveau composant graphique, et n'en sont pas gênés.

Un tel contrôle de fenêtres applicatives dans un système d'exploitation est notamment décrit par les publications US 2007/0180400 A1 et US 2009/0109187 A1. On connait également les documents US 2008/0168403 A1 et EP 2101253 A1 décrivant l'analyse des gestes d'un utilisateur dans une interface graphique.

Selon le document US 2007/0180400 A1, un utilisateur trace une forme géométrique, telle qu'un rectangle ou un symbole, sur le bureau informatique, forme à partir de laquelle le système d'exploitation détermine l'apparence souhaitée de la fenêtre applicative. L'utilisateur identifie ensuite l'application qu'il souhaite affecter à cette nouvelle fenêtre par exemple au travers d'une boîte de dialogue, du menu Démarrer ou en écrivant le nom de l'application à même le bureau.

Toutefois, le contrôle décrit par la publication US 2007/0180400 n'est pas entièrement satisfaisant, notamment du fait qu'il est dédié à des interfaces mono-utilisateurs, dont l'écran d'affichage est orienté.

En effet, il existe des dispositifs d'affichage pouvant être utilisés par plusieurs utilisateurs situés de plusieurs côtés du dispositif, par exemple des tablettes interactives autour desquelles les utilisateurs se placent.

Dans ce contexte, la présente invention vise à proposer une solution adaptée à la fois aux interfaces orientées mono-utilisateurs et aux interfaces pluri-utilisateurs accessibles depuis plusieurs côtés.

A cet effet, l'invention vise notamment un procédé tel que défini précédemment, comprenant en outre, une étape de détermination d'un sens du composant graphique créé de sorte à afficher des données de la fonction applicative associée, dans ledit composant graphique applicatif, selon ledit sens déterminé.

On notera que la détermination du sens d'affichage est faite alors que le composant graphique est encore indifférencié.

Selon l'invention, selon la revendication 1, la création des fenêtres applicatives de façon non invasive à l'encontre des autres utilisateurs d'une interface graphique multi-accès est rendue plus précise.

Dans un mode de réalisation de l'invention, le procédé comprend une étape de reconnaissance d'une forme graphique modèle à partir du tracé et une étape d'affichage de ladite forme graphique modèle au lieu de la forme tracée. Cette disposition permet de conserver un affichage régulier et propre des différentes fenêtres applicatives. Il en résulte une organisation plus aisée des fenêtres sur l'interface.

Selon une caractéristique particulière de l'invention, ladite étape de traçage comprend le traçage d'un raccourci graphique. Le raccourci graphique peut notamment être un tracé partiel de la forme graphique modèle mais également une forme simple quelconque à laquelle correspond la forme graphique, généralement plus complexe. Cette disposition permet d'accélérer le lancement d'une application et donc d'améliorer l'interactivité pour les utilisateurs.

Dans un mode de réalisation, la forme graphique tracée détermine les dimensions, position et orientation dudit composant graphique affiché sur l'interface. De la sorte, l'invention confère, aux utilisateurs, un contrôle précis de l'espace d'interaction.

Dans un mode de réalisation, ladite détermination du sens d'affichage est automatique en fonction dudit tracé. Elle est donc déduite par exemple de la façon dont la forme graphique est tracée. Cette détermination automatique améliore encore le contrôle du lancement d'une nouvelle application, et donc l'interaction de l'utilisateur dans l'environnement de travail.

En variante, ladite détermination de l'orientation comprend une étape d'indication, par un utilisateur, sur l'interface graphique, dudit sens d'affichage.

Dans un mode de réalisation de l'invention, le procédé comprend une étape d'affichage dudit composant graphique créé et d'un menu de sélection entre au moins deux fonctions applicatives,
et une étape de sélection d'une dite fonction applicative de sorte à associer ladite fonction applicative sélectionnée au composant graphique créé.

Ici, l'invention permet d'afficher, après avoir effectué le tracé du composant graphique, les choix possibles de spécialisation du composant graphique alors indifférencié. Cet affichage peut être automatique afin d'améliorer la vitesse d'interaction pour le lancement d'applications, et revêtir différentes formes telles que des icônes cliquables, un menu déroulant ou éventail, ou tout autre de menu permettant de proposer à la sélection un nombre de choix possibles.

En particulier, ledit menu de sélection est affiché à l'intérieur dudit composant graphique créé. On évite ainsi un risque de confusion possible lorsque plusieurs nouveaux composants graphiques sont lancés simultanément. En outre, l'interaction est améliorée du fait qu'à cet instant, l'utilisateur est concentré sur la zone qu'il vient de dessiner.

Selon une caractéristique particulière, le menu de sélection est fonction du contexte de l'interface graphique. On entend par "contexte de l'interface graphique" une ou plusieurs informations (graphiques et/ou de contenu) présentes sur l'interface graphique et dans les applications affichées. Cette disposition permet de réduire le nombre d'entrées du menu de sélection aux choix possibles compte tenu dudit contexte. Ce choix restreint améliore la visibilité des choix possibles, la rapidité de sélection et donc le lancement d'un nouveau composant graphique applicatif. Cette caractéristique est notamment utile pour les interfaces tactiles pour lesquelles la taille des icônes ou entrées du menu est conditionnée par la taille du contact tactile (doigt ou stylet).

En particulier, le menu de sélection est fonction de la forme du composant graphique créé. De la sorte, l'utilisateur peut volontairement, par le seul tracé, restreindre l'ensemble des fonctions (ou spécialisations) applicatives qu'il pourra associer à la forme tracée, favorisant ainsi un lancement plus rapide.

En variante ou en combinaison, le menu de sélection est fonction du sens d'affichage déterminé pour le composant graphique créé. Cette disposition peut s'avérer utile pour certaines utilisations du dispositif d'affichage. Par exemple, dans le cas d'une table interactive, on peut limiter les applications accessibles pour un côté de la table (par exemple pour un élève) et autoriser un plus grand nombre d'applications pour l'autre côté (par exemple un professeur).

D'autres paramètres peuvent être pris en compte, comme par exemple l'environnement de travail ou les autres fenêtres déjà ouvertes.

Dans un mode de réalisation particulier de l'invention, le procédé comprend une étape de reconnaissance, à partir dudit tracé, d'une forme graphique à laquelle est associée une unique fonction applicative donnée, et l'étape d'association consiste à associer ladite fonction applicative donnée au composant graphique créé à partir de la forme reconnue. Cette affectation automatique d'une fonction applicative par la forme permet, en un seul tracé, de lancer un nouveau composant graphique applicatif dans l'espace délimité par ledit tracé, qu'il soit complet, partiel ou via un raccourci graphique. Dans cette configuration, l'invention offre la plus grande rapidité de lancement contrôlé d'une nouvelle fonction applicative.

L'invention concerne également un système de gestion selon la revendication 13.

Le système de gestion présente des avantages similaires à ceux du procédé de gestion exposé ci-dessus, notamment celui d'améliorer l'interaction dans un espace numérique de travail d'une interface graphique accessible par plusieurs utilisateurs et de faciliter le lancement d'applications.

De façon optionnelle, le système peut comprendre des moyens se rapportant aux caractéristiques du procédé exposé précédemment.

L'invention concerne également un moyen de stockage d'informations selon la revendication 14.

L'invention concerne également un programme d'ordinateur lisible par un microprocesseur, selon la revendication 15.

Les moyens de stockage d'information et programme d'ordinateur présentent des caractéristiques et avantages analogues aux procédés qu'ils mettent en oeuvre.

D'autres particularités et avantages de l'invention apparaîtront dans la description ci-après, illustrée par les dessins ci-joints, dans lesquels :
- les **figures 1a** et **1g** illustrent le lancement d'applications selon la présente invention;
- la **figure 2** représente, sous forme d'ordinogramme, des étapes générales du procédé selon l'invention;
- la **figure 3** illustre la reconnaissance d'une forme graphique modèle, mise en oeuvre dans le procédé de la **figure 2****;**
- les **figures 4a** et **4b** illustrent le principe d'un tracé partiel;
- les **figures 5a** à **5c** illustrent un exemple de détermination du sens de lecture de composants graphiques, mise en oeuvre dans la **figure 2****;**
- la **figure 6** illustre un exemple de tracé complexe associé directement à un composant graphique applicatif spécialisé; et
- la **figure 7** montre une configuration matérielle particulière d'un dispositif apte à une mise en oeuvre du procédé selon l'invention.

On décrit maintenant le lancement d'un logiciel applicatif par la mise en oeuvre de l'invention. Le terme "logiciel applicatif" regroupe à la fois la notion d'application (ou logiciel) désignant les programmes informatiques qui servent à aider l'utilisateur dans une de ses activités, et la notion de fonction applicative désignant un élément (ou fonction) d'une application, comme par exemple une boîte à outils prévue dans l'application, des bulles de commentaires sur un composant graphique d'une fenêtre, des boutons ou zones de texte dans un éditeur graphique, etc. Pour la suite de la description, on fait principalement référence aux applications, l'homme du métier étant à même de réaliser les adaptations nécessaires dans le cas des fonctions applicatives.

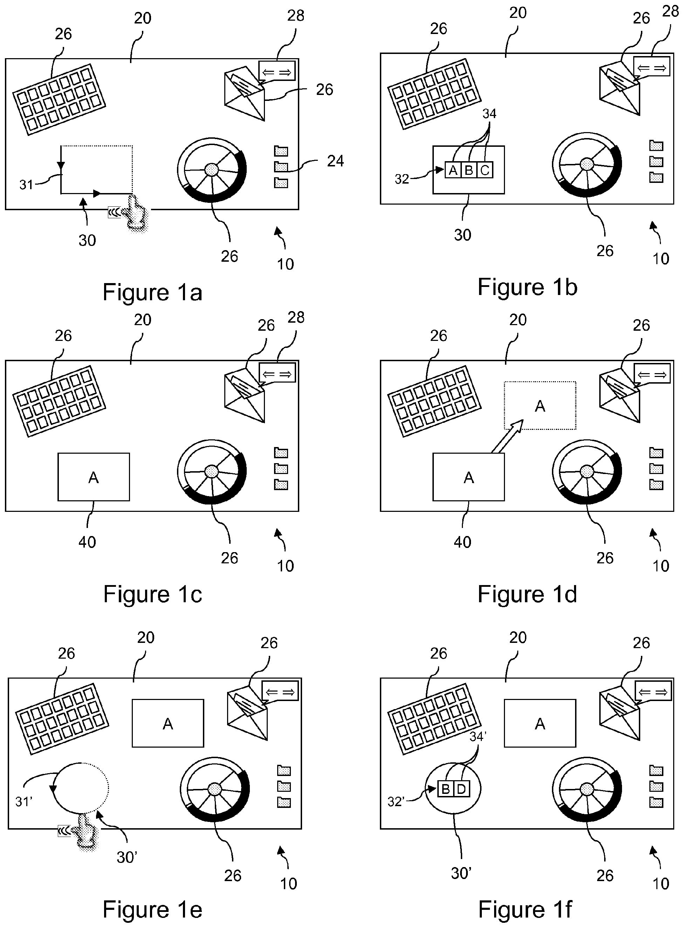

Comme illustré par la **figure 1a****,** l'utilisateur fait face à une interface graphique utilisateur 10 affichée sur un dispositif informatique d'affichage qui peut revêtir la forme d'un écran d'ordinateur, d'un téléphone mobile, d'une table ou tablette interactive, d'un tableau blanc ou encore d'un mur interactif. De façon préférée, il s'agit d'un dispositif de type tactile sensible au doigt de l'utilisateur ou à un stylet manipulé par celui-ci. Un tel type de dispositif facilite le traçage des formes graphiques, contrairement à une souris, et est bien connu de l'homme du métier. Il ne sera donc pas décrit plus en détail.

En variante, un dispositif de pointage, tel une souris ou un pavé tactile ("*touchpad*"), peut être prévu de façon déportée par rapport au dispositif d'affichage.

L'écran affiche, sur l'interface 10, un bureau informatique 20 définissant un espace numérique de travail (bien connu de l'homme du métier), lequel contient des icônes 24 représentant des documents numériques ou des applications, et des fenêtres applicatives 26 affichant des données de tout ou partie du contenu d'applications en cours d'exécution, par exemple un document en cours d'édition, un dossier informatique ouvert ou une boîte email. Dans le cas des fonctions applicatives d'une application, des éléments graphiques 28 correspondants (ici une flèche pour répondre à un courriel et une flèche pour transférer un courriel) peuvent également s'afficher, et faire l'objet de la présente invention comme introduit précédemment.

De façon connue en soi, les applications 26 sont mémorisées en mémoire d'un dispositif de traitement relié au dispositif d'affichage et sont exécutées sur commande de lancement. L'utilisateur interagit ensuite avec une de ces applications dans l'interface 10 au niveau de la fenêtre associée.

A titre d'exemple, on a représenté ici une première fenêtre représentant un navigateur de fichiers dans lequel apparaît un ensemble de photos au niveau d'un répertoire informatique.

L'utilisateur souhaite alors ouvrir une nouvelle application, par exemple un deuxième répertoire vers lequel il souhaite transférer ou copier les photos du premier répertoire.

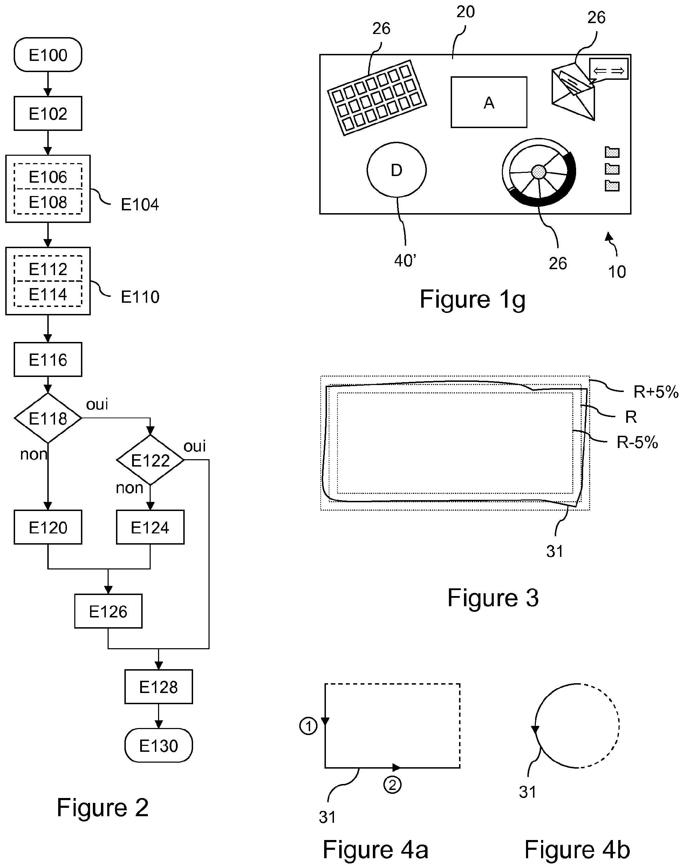

Selon l'invention, l'utilisateur va d'abord spécifier les caractéristiques "physiques" du composant graphique 30, ou "fenêtre", qui servira à contenir le nouveau répertoire souhaité : sa forme qui peut être rectangulaire, ronde ou autre, ses dimensions, son orientation et sa position. Pour ce faire, l'utilisateur dessine sur le dispositif d'affichage, au doigt ou avec un autre dispositif de pointage, les contours explicites 31 du composant à l'endroit exactement où il doit s'afficher et dans les dimensions souhaitées (**figure 1a****,** la portion en pointillé indiquant la suite du tracé que l'utilisateur va réaliser). On note que pour simplifier les traitements ultérieurs (notamment la détermination automatique du sens de lecture - voir étape E110 de la **figure 2**), un tracé 31 est débuté au niveau d'un sommet (si la forme en comprend un).

A ce stade, le composant graphique 30 est indifférencié en ce qu'il n'est pas associé à une application particulière, dans notre exemple le navigateur de fichiers. Le composant graphique indifférencié 30 s'affiche à l'emplacement exact où il a été dessiné, dans les dimensions tracées et selon l'orientation prévue par l'utilisateur **(****figure 1b**). De façon connue en soi pour des interfaces graphiques, l'utilisateur peut déplacer, redimensionner ou réorienter le composant graphique créé si nécessaire.

Un menu 32 proposant des choix 34 d'applications pour spécialiser le composant graphique 30 est alors affiché à proximité du composant 30 créé, de préférence à l'intérieur. Dans notre exemple, le menu comprend trois entrées dont une correspond au navigateur de fichiers (entrée A sur la **figure 1b**). Le menu proposé peut se présenter sous diverses formes: série d'icônes cliquables, menu déroulant si les dimensions le permettent, etc.

L'utilisateur sélectionne alors l'entrée du menu souhaité, ici l'entrée A, à l'aide de son doigt ou du dispositif de pointage ad hoc. L'application visée par l'entrée sélectionnée est alors affectée au composant graphique indifférencié 30, le spécialisant dans son usage applicatif définitif. On obtient ainsi une fenêtre applicative 40 classique (**figure 1c**) qui, dans notre exemple, affiche un navigateur de fichiers, et qui est équivalente aux fenêtres 26 déjà existantes. L'utilisateur dispose ainsi, côte à côte, des deux répertoires source et cible pour déplacer les photos.

L'utilisateur utilise alors de façon classique l'interface graphique 10 et la nouvelle fenêtre applicative 40 créée: fermeture de fenêtres, déplacement de fenêtres (**figure 1d**), rotation de fenêtre, utilisation d'une application au travers d'une fenêtre 26 particulière, etc.

Le même utilisateur ou un autre utilisateur peut alors décider d'ouvrir une nouvelle fenêtre applicative 40', cette fois-ci de forme ronde, en traçant tout d'abord le composant graphique circulaire 30' (**figure 1e**), en choisissant l'application souhaité au travers d'un nouveau menu 32' (**figure 1f**) afin d'obtenir le fenêtre applicative spécialisée 40' (**figure 1g**).

En choisissant dans le processus de création de la fenêtre application, sa forme, son emplacement, son orientation et ses dimensions, l'utilisateur peut aisément ne pas interférer avec la portion d'espace de travail utilisée par un autre utilisateur du même dispositif d'affichage, et peut également, pour un usage personnel, organiser directement ses fenêtres de façon optimale en fonction de l'utilisation souhaitée.

On décrit maintenant, en référence à la **figure 2****,** les étapes du procédé selon l'invention, pour le lancement d'une nouvelle application sur une tablette interactive tactile, par exemple de type capacitive. Ces étapes sont notamment mises en oeuvre par un logiciel exécuté dans le dispositif pilotant l'affichage, par exemple le système opérationnel gérant également l'espace de travail, en lien avec les pilotes ou microcontrôleurs des dispositifs mis en oeuvre (écran, pointage, mémoire, etc.).

A l'étape E100, un utilisateur dispose d'un espace numérique de travail 20 contenant déjà éventuellement des fenêtres applicatives 26 ouvertes ou d'autres icônes.

A l'étape E102, l'utilisateur choisit, dans l'espace de travail, une région vierge de composants ou éléments graphiques, de sorte à y dessiner la forme d'un nouveau composant 30 à l'aide de son doigt, sur la dalle tactile de la tablette interactive.

Les circuits capacitifs et les logiciels d'acquisition prévus acquièrent périodiquement les coordonnées du doigt de l'utilisateur qui se déplace sur la dalle. Les points successifs (échantillonnant le tracé réalisé 31) sont mémorisés dans une mémoire du système jusqu'à ce que l'utilisateur relève son doigt. A ce moment, l'acquisition est considérée comme terminée, et le système a mémorisé le tracé 31 à la volée, lequel s'affiche sur le dispositif d'affichage.

A l'étape optionnelle E104, le système procède à une reconnaissance automatique de la forme tracée 31 par l'utilisateur. Plusieurs reconnaissances peuvent être mises en oeuvre de façon alternative, ou en combinaison.

D'une part, il peut s'agir d'une reconnaissance E106 en vue d'une correction automatique du tracé. Ainsi, on peut obtenir une restitution graphique régulière des composants graphiques.

Dans ce cas, le tracé 31, enregistré sous forme de liste de points, est transmis à un module d'analyse pour identifier la forme qu'il est censé représenter.

A titre d'exemple comme illustré sur la **figure 3****,** cette analyse peut être menée par comparaison (avec homothétie et rotation le cas échéant) entre la forme tracée et des formes modèles élémentaires (rectangle, cercle, triangle). La forme tracée 31 est comparée à un modèle R et à des homothéties de ce modèle (ici +/-5%). La forme 31 est considérée comme représentant le modèle R si tout le tracé 31 est inclus entre les deux homothéties R-5% et R+5%. Bien entendu, d'autres approches d'analyse et d'autres paramètres (+/- 5%) peuvent être mis en oeuvre dans le cadre de la présente invention.

Une fois la forme graphique modèle R identifiée, le système en extrait les caractéristiques géométriques, utiles notamment pour effectuer un affichage à moindre coût du composant graphique 30, par simple transmission de ces caractéristiques: pour un rectangle, la largeur, la hauteur, un angle de rotation (orientation) et la position de son centre; pour le cercle, le rayon et la position de son centre; pour un triangle, la position des trois sommets.

Dans les systèmes existants, un tracé englobant des éléments ou composants graphiques a généralement pour objectif de procéder à une sélection (au sens informatique du terme) de ces dits composants/éléments. Dans ce contexte, le système peut en outre prévoir d'identifier si au moins un composant/élément graphique 26/24 déjà existant est inclus à l'intérieur du tracé auquel cas un mode sélection tel que connu est activé. En revanche, si aucun composant/élément graphique n'est détecté à l'intérieur du tracé 31, le procédé selon l'invention se poursuit.

Une autre reconnaissance automatique E108 est relative à l'utilisation de raccourcis gestuels ou "tracés partiels". Cela englobe à la fois le tracé d'une partie seulement de la forme souhaitée et le tracé d'une forme particulière à laquelle est associée une forme prédéfinie. Pour la mise en oeuvre de l'invention, ces tracés partiels permettent de préciser l'ensemble des informations nécessaires au positionnement du composant graphique 30, à son dimensionnement, à son orientation.

A titre d'exemple, on peut, pour créer un composant 30 de forme rectangulaire, se contenter de tracer la moitié du contour (**figure 4a**). En effet, la hauteur et la largeur tracées permettent de déterminer toutes les informations nécessaires à l'affichage. Le système, s'il détecte un tracé non fermé, peut ainsi, par des règles d'interpolation simples, déterminer la forme fermée (pointillés sur la figure).

De façon similaire, pour un composant de forme circulaire, on peut également se contenter de ne tracer qu'un demi-cercle (**figure 4b**).

D'autres cas plus ou moins complexes peuvent être envisagés: fermer la forme partielle par un trait entre les deux extrémités (permettant par exemple de tracer uniquement deux côtés d'un triangle), tracer un symbole particulier (par exemple "+") pour désigner une forme particulière (par exemple un carré encadrant le symbole "+").

On notera que dans le cas où l'étape E104 n'est pas réalisée, la forme tracée 31 est sensiblement fermée et est utilisée, comme telle, comme composant graphique 30.

Le procédé de la **figure 2** se poursuit à l'étape E110 par la détermination du sens de lecture du composant graphique 30 tracé, éventuellement corrigé en forme régulière.

En effet, le composant 30 est destiné à héberger une application qui affiche du texte ou des images par exemple, avec donc un sens de lecture privilégié. La simple indication de forme ne précise pas, par exemple pour le rectangle, si le composant est en mode lecture paysage ou portrait ni dans quel sens. On note en outre que, si sur un écran vertical d'ordinateur la notion de sens de lecture est immédiate, ce n'est pas le cas pour une tablette interactive ou une ardoise autour de laquelle les utilisateurs peuvent se placer.

Une détermination automatique et une détermination manuelle sont alors envisagée de façon alternative.

Dans le cas d'une détermination manuelle, à l'étape E112, l'utilisateur indique le sens de lecture dans le composant graphique 30, par exemple par un trait indiquant le haut de lecture à son extrémité de départ et le bas de lecture à son extrémité d'arrivée. A l'étape E114, le système interprète le trait dessiné pour déterminer le haut et le bas de lecture. Ces informations sont mémorisées dans le système pour permettre l'affichage ultérieur d'une application dans le composant dessiné 30 dans le bon sens de lecture.

Dans le cas d'une détermination automatique, l'étape E112 n'est pas réalisée, et à l'étape E114, le système déduit implicitement du tracé 31 le sens de lecture.

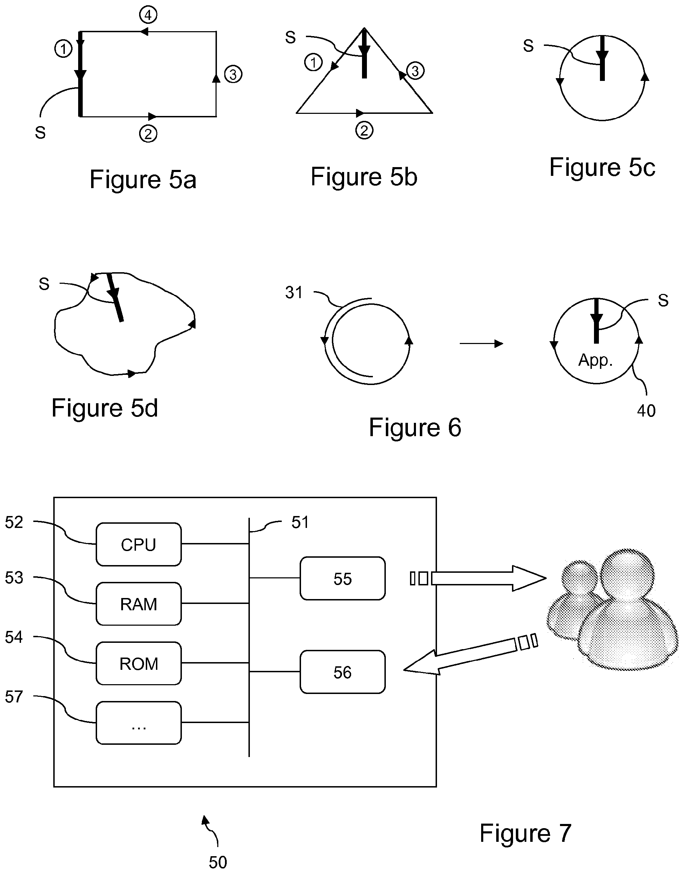

Un choix de convention est fait au préalable. A titre d'exemple, pour le rectangle, le sens de lecture S est donné par la direction du premier coté tracé (voir flèche épaisse sur la **figure 5a**); pour le triangle, le sens de lecture S est donné par la direction du vecteur reliant le premier sommet au centre du triangle (**figure 5b**); pour le cercle, c'est la direction reliant le premier point du tracé au centre du cercle **(****figure 5c**); pour une forme quelconque, le sens de lecture S peut être donné par la direction donnée du premier point tracé au centre de la forme (par exemple l'isobarycentre des points constituant la forme) dont le contour a été ré-échantillonné régulièrement selon l'abscisse curviligne **(****figure 5d**).

Le système peut alors afficher (étape E116) le composant graphique régulier 30 sur le dispositif d'affichage, en lieu et place du tracé 31. A ce stade du procédé, le composant graphique 30 est indifférencié.

A l'étape E118, on détermine s'il existe un ensemble restreint d'applications disponibles qui sont spécifiquement associées à une forme telle que celle tracée et orientée 30. Pour procéder à cette détermination, on peut disposer d'une table de conversion pré-remplie qui associe à chaque forme, un ensemble d'applications possibles, éventuellement une seule application.

L'étape E118 consiste alors à déterminer s'il existe, dans cette table, une entrée associée à la forme tracée et orientée 30.

Dans la négative, le système affiche, à l'étape E120, un menu 32 comprenant toutes les applications du système et non un sous-ensemble. Comme précisé précédemment, ce menu peut consister, par exemple, en un ensemble d'icônes cliquables, en un menu déroulant d'entrées ou en un menu éventail (on étire le menu d'une main et on choisit une entrée de l'autre), et peut être positionné soit à l'intérieur du composant graphique 30, soit au voisinage proche de celui-ci.

Dans l'affirmative de l'étape E118, le système détermine, à l'étape E122, si l'entrée identifiée comprend une seule application possible. En d'autres termes, on détermine ici si la forme tracée et orientée 30 correspond à une seule application possible.

A titre d'exemple, ce peut être le cas pour des formes graphiques dessinées complexes qui peuvent être associées directement à une application.

Un tracé en spirale **(****figure 6**) peut par exemple servir pour dessiner un composant circulaire (le plus grand cercle contenu dans la spirale) et indiquer, du fait que la forme est une spirale (par exemple 1 tour et demi), une application spécifique sans passer par le menu 32. Cette approche permet, en un seul tracé, de résumer :
- l'application à lancer, et
- la position, l'orientation, les dimensions et le sens de lecture de la fenêtre applicative 40.

En jouant sur un paramètre du tracé 31 (par exemple le nombre de tours de la spirale), l'invention permet un choix direct entre plusieurs applications pour une même forme.

Si plusieurs applications sont possibles (sortie non de l'étape E122), le système affiche, à l'étape E124 et de façon similaire à l'étape E120, l'ensemble restreint des applications possibles sous la forme d'un menu 32.

Cet affichage E120/E124 est illustré notamment par les **figures 1b** et **1f** précitées.

On voit ici qu'en réduisant le nombre d'entrées possibles du menu 32 de sélection, on affiche un menu de plus petite taille ce qui constitue un avantage pour les interfaces tactiles pour lesquelles la taille des éléments graphiques (ici les entrées) dépend de la taille de contact tactile. Typiquement, on met moins d'entrées graphiques dans un menu déroulant tactile que sur une interface traditionnelle clavier/souris.

L'invention ne se limite toutefois pas à l'association entre une forme tracée et un ensemble d'applications. D'autres paramètres contextuels de l'espace numérique de travail peuvent être pris en compte, en combinaison ou de façon alternative :
- la forme du composant dessiné 30: par exemple, à un rectangle est associé un ensemble d'applications possibles, et à un cercle un autre ensemble distinct d'applications;
- le sens de lecture du composant dessiné 30: de la sorte on peut autoriser ou interdire certaines applications en fonction de l'emplacement de l'utilisateur tout autour de la tablette interactive;
- l'emplacement du composant 30: l'espace de travail pouvant être divisé en plusieurs zones, chacune étant associée à un ensemble d'applications possibles;
- le sens du tracé 31: horaire ou anti-horaire;
- les dimensions du composant dessiné 30;
- la nature de la fenêtre "active" lors de l'ouverture de la nouvelle application. C'est en particulier le cas lorsque le nouveau composant graphique créé est dédié à une fonction d'une application "active", par exemple pour afficher des barres d'outils;
- la nature des autres applications ouvertes dans l'espace de travail; etc.

A titre illustratif, on a représenté ci-dessous un exemple de table associant un contexte et des applications possibles.

| Contexte | Applications possibles |
|---|---|
| Forme tracée: triangle | A, C, E |
| Forme tracée:rectangle | A, B, C |
| Forme tracée:circulaire | B, D |
| Forme dans la partie supérieure | A, B, D, E |
| Forme dans la partie inférieure | A, B, C, E |
| Fenêtre active: boîte email | B, D |
| Fenêtre active: explorateur de fichiers | A, B, D |
| Fenêtre active: navigateur web | A, C, E |

Si plusieurs critères contextuels sont pris en compte en combinaison, les applications proposées dans le menu sont celles résultant de l'intersection des ensembles d'applications de chaque critère retenu.

Suite aux étapes E120 et E124, l'utilisateur sélectionne une entrée du menu 32, lors de l'étape E126.

L'application ainsi sélectionnée (étape E126) ou automatiquement associée à la forme dessinée (sortie oui de l'étape E122) est affectée, à l'étape E128, au composant graphique 30 dessiné de sorte à le spécialiser. Il en résulte un composant graphique applicatif 40, c'est-à-dire une fenêtre applicative classique, dans la forme dessinée (voir **figures 1c** et **1g**) et qui affiche l'application sélectionnée.

Le procédé se termine à l'étape E130 où l'utilisateur utilise l'espace de travail de façon classique. L'étape E130 est similaire à l'étape E100.

Bien entendu, sur des dispositifs d'affichage multi-utilisateurs, le procédé selon l'invention peut être mis en oeuvre simultanément par plusieurs utilisateurs de sorte à lancer, pour chacun d'entre eux, une nouvelle application. La gestion multi-utilisateurs étant connue de l'homme du métier, elle ne sera pas décrite plus en détail ici.

Ainsi, l'invention permet de positionner, orienter et dimensionner plus facilement et plus rapidement un composant graphique applicatif (fenêtre applicative) sur l'interface graphique. Cela confère une meilleure interaction, notamment :
- lorsque l'interface graphique nécessite de disposer de plusieurs fenêtres ouvertes ou composants graphiques applicatifs (tris de photos par exemple lorsqu'on doit transférer dans un répertoire cible des photos de sources différentes);
- lorsque l'on travaille sur une table interactive avec d'autres utilisateurs et qu'une gestion de l'espace d'interaction doit être menée de façon commune. En dessinant le composant graphique à même la table,
   ∘ les autres utilisateurs sont alors implicitement avertis de l'action et ne sont pas surpris de l'apparition d'un nouveau composant graphique pour le lancement d'une nouvelle application,
   ∘ l'invention permet d'éviter le chevauchement visuel avec d'autres composants utilisés par ces autres utilisateurs,
   ∘ en pouvant choisir toute forme orientée souhaitée (dans TWM, seuls les rectangles déjà orientés verticalement sont prévus), l'espace de travail peut être mieux exploité.

La **figure 7** montre schématiquement un système 50 pour la mise en oeuvre de l'invention.

Le système 50 comprend un bus de communication 51 auquel sont reliés une unité centrale de traitement ou "microprocesseur" 52, une mémoire vive 53, une mémoire morte 54, un dispositif d'affichage 55, un dispositif de pointage 56 et éventuellement d'autres périphériques 57 (interface de communication, lecteur de disquette ou disques, etc.).

La mémoire morte 54 comprend les programmes dont l'exécution permet la mise en oeuvre du procédé selon l'invention, ainsi que les fichiers exécutables des applications mises en oeuvre au travers des fenêtres applicatives. La mémoire morte 54 est aussi prévue pour mémoriser les points des tracés 51, les tables de conversion, etc.

Lors de l'exécution de programmes, le code exécutable de ceux-ci est chargé en mémoire vive 53, type RAM, et exécuté par le microprocesseur 52. Cette exécution permet l'affichage de l'espace numérique de travail, des fenêtres applicatives, ainsi que l'exécution à proprement parler des applications visualisées dans ces fenêtres.

Le dispositif d'affichage 55, tel qu'un écran, une dalle LCD ou un vidéo-projecteur, permet l'affichage de l'interface graphique utilisateur par laquelle l'utilisateur visualise l'exécution des applications et interagit.

Le dispositif de pointage 56 peut être intégré au dispositif d'affichage, notamment lorsqu'il s'agit d'un écran tactile, ou déporté, par exemple une souris, un touchpad ou encore une tablette graphique.

Le dispositif décrit ici et, particulièrement, l'unité centrale 52, sont susceptibles de mettre en oeuvre tout ou partie des traitements décrits en lien avec les **figures 1** à **6****,** pour mettre en oeuvre les procédés objets de la présente invention et constituer les systèmes objets de la présente invention.

Les exemples qui précèdent ne sont que des modes de réalisation de l'invention qui ne s'y limite pas.

## Revendications

1. Procédé de gestion d'une interface graphique utilisateur (10) affichée sur l'écran tactile
d'un dispositif accessible par plusieurs utilisateurs, ladite interface étant agencée pour comprendre des composants graphiques applicatifs (26, 40, 40'), un composant graphique applicatif affichant une fonction applicative associée, le procédé comprenant les étapes consistant à :
- tracer (E102), sur l'interface, une forme graphique (31, 31'),
- créer un composant graphique (30, 30') dont la forme, l'emplacement, l'orientation et les dimensions, sont déterminés à partir de ladite forme graphique (31, 31'),
- associer (E128) une fonction applicative audit composant graphique créé pour affecter le composant graphique à l'affichage de ladite fonction applicative dans une fenêtre applicative (40, 40'),
**caractérisé en ce qu'**il comprend en outre une étape de détermination (E110) d'un sens de lecture (S) du composant graphique créé, ledit sens de lecture (S) étant dépendant d'un emplacement d'un utilisateur autour de l'écran, de sorte que certaines fonctions applicatives soient autorisées ou interdites en fonction de l'emplacement de l'utilisateur, ledit emplacement étant déterminé relativement à un côté de l'écran, et de sorte à afficher dans le composant graphique des données de la fonction applicative associée selon ledit sens de lecture déterminé.

2. Procédé selon la revendication 1, comprenant une étape de reconnaissance (E104) d'une forme graphique modèle (R) à partir du tracé (31, 31') et une étape d'affichage (E116) de ladite forme graphique modèle (30) au lieu de la forme tracée.

3. Procédé selon la revendication précédente, dans lequel ladite étape de traçage (E102) comprend le traçage d'un raccourci graphique.

4. Procédé selon la revendication 1, dans lequel ladite détermination (E110) du sens de lecture (S) est automatique en fonction dudit tracé (31, 31').

5. Procédé selon la revendication 4, dans lequel le sens du composant graphique est défini par la direction donnée entre le premier point tracé et un centre de la forme graphique tracée.

6. Procédé selon la revendication 4, dans lequel, pour une forme graphique tracée de type rectangle, le sens du composant graphique est défini par la direction du premier côté tracé.

7. Procédé selon la revendication 1, dans lequel ladite détermination (E110) du sens de lecture (S) comprend, en plus du traçage de la forme graphique, l'indication par l'utilisateur sur l'interface graphique dudit sens de lecture.

8. Procédé selon la revendication 7, dans lequel ladite détermination (E110) du sens de lecture (S) comprend le traçage, par l'utilisateur et à l'intérieur du composant graphique, d'un trait dont l'extrémité de départ et l'extrémité d'arrivée définissent relativement le haut et le bas d'affichage.

9. Procédé selon la revendication 1, comprenant une étape d'affichage (E116, E120, E124) dudit composant graphique créé (30, 30') et d'un menu de sélection (32, 32') entre au moins deux fonctions applicatives (34, 34'), et une étape de sélection (E126) d'une dite fonction applicative de sorte à associer ladite fonction applicative sélectionnée au composant graphique créé.

10. Procédé selon la revendication précédente, dans lequel ledit menu de sélection (32, 32') est affiché à l'intérieur dudit composant graphique créé (30, 30').

11. Procédé selon la revendication 9, dans lequel le menu de sélection (32, 32') est fonction dudit sens de lecture déterminé pour le composant graphique créé.

12. Procédé selon la revendication 1, dans lequel l'écran est divisé en plusieurs zones, chacune étant associée à un ensemble d'applications possibles, de sorte que la position sur l'écran où est tracée la forme graphique (31, 31') détermine l'ensemble d'applications pouvant être lancées.

13. Système (50) de gestion d'une interface graphique utilisateur (10) affichée sur l'écran tactile d'un dispositif accessible par plusieurs utilisateurs, ladite interface étant agencée pour comprendre des composants graphiques applicatifs (26, 40, 40'), un composant graphique applicatif affichant une fonction applicative associée, le système comprenant :
- un dispositif d'acquisition et d'affichage (55, 56) d'une forme graphique tracée (31, 31') par un utilisateur sur l'interface graphique utilisateur de sorte à créer un composant graphique (30, 30'), dont la forme, l'emplacement, l'orientation et les dimensions, sont déterminés à partir de ladite forme graphique (31, 31'), et
- un moyen d'association d'une fonction applicative informatique audit composant graphique ainsi créé pour l'affecter à l'affichage de ladite fonction applicative dans une fenêtre applicative (40, 40'), le système étant **caractérisé en ce qu'**il comprend, en outre, un moyen informatique configuré pour déterminer un sens de lecture (S) du composant graphique créé, ledit sens de lecture (S) étant dépendant d'un emplacement d'un utilisateur autour de l'écran, de sorte que certaines fonctions applicatives soient autorisées ou interdites en fonction de l'emplacement de l'utilisateur, ledit emplacement étant déterminé relativement à un côté de l'écran, et pour contrôler l'affichage des données de la fonction applicative dans le composant graphique selon ledit sens de lecture (S) déterminé.

14. Moyen de stockage d'informations comprenant des instructions pour un programme informatique adapté à mettre en oeuvre le procédé de gestion conforme à l'une quelconque des revendications 1 à 12, lorsque ce programme est chargé et exécuté par le système selon la revendication 13.

15. Produit programme d'ordinateur lisible par un microprocesseur, comprenant des instructions pour la mise en oeuvre du procédé de gestion conforme à l'une quelconque des revendications 1 à 12, lorsque ce programme est chargé et exécuté par le microprocesseur par le système selon la revendication 13.

## Patentansprüche

1. Verfahren zur Verwaltung einer grafischen Benutzeroberfläche (10), die auf dem Touchscreen einer für mehrere Nutzer zugänglichen Einrichtung angezeigt wird, wobei die Schnittstelle dazu eingerichtet ist, mehrere grafische Anwendungskomponenten (26, 40, 40') zu umfassen, wobei eine grafische Anwendungskomponente eine zugeordnete Anwendungsfunktion anzeigt, wobei das Verfahren die Schritte umfasst, die darin bestehen:
- auf der Schnittstelle (E102) eine grafische Form (31, 31') zu zeichnen,
- eine grafische Komponente (30, 30') zu erstellen, deren Form, Position, Ausrichtung und Abmessungen ausgehend von der grafischen Form (31, 31') bestimmt werden,
- der erstellten grafischen Komponente eine Anwendungsfunktion (E128) zuzuordnen, um die grafische Komponente der Anzeige der Anwendungsfunktion in einem Anwendungsfenster (40, 40') zuzuweisen,
**dadurch gekennzeichnet, dass** es ferner einen Schritt des Bestimmens (E110) einer Leserichtung (S) der erstellten grafischen Komponente umfasst, wobei die Leserichtung (S) von einer Position eines Benutzers um den Bildschirm herum abhängig ist, so dass bestimmte Anwendungsfunktionen in Abhängigkeit von der Position des Benutzers erlaubt oder verboten sind, wobei die Position relativ zu einer Seite des Bildschirms bestimmt wird und so, dass in der grafischen Komponente Daten der zugeordneten Anwendungsfunktion entsprechend der bestimmten Leserichtung angezeigt werden.

2. Verfahren nach Anspruch 1, umfassend einen Schritt des Erkennens (E104) einer grafischen Musterform (R) ausgehend von der Zeichnung (31, 31') und einen Schritt des Anzeigens (E116) der grafischen Musterform (30) anstelle der gezeichneten Form.

3. Verfahren nach dem vorhergehenden Anspruch, bei dem der Schritt des Zeichnens (E102) das Zeichnen eines grafischen Kürzels umfasst.

4. Verfahren nach Anspruch 1, bei dem das Bestimmen (E110) der Leserichtung (S) automatisch in Abhängigkeit von der Zeichnung (31, 31') erfolgt.

5. Verfahren nach Anspruch 4, bei dem die Richtung der grafischen Komponente durch die gegebene Richtung zwischen dem ersten gezeichneten Punkt und einem Mittelpunkt der gezeichneten grafischen Form definiert wird.

6. Verfahren nach Anspruch 4, bei dem für eine gezeichnete Form von der Art eines Rechtecks die Richtung der grafischen Komponente durch die Richtung der ersten gezeichneten Seite definiert wird.

7. Verfahren nach Anspruch 1, bei dem das Bestimmen (E110) der Leserichtung (S) zusätzlich zum Zeichnen der grafischen Form die Angabe der Leserichtung durch den Benutzer auf der grafischen Schnittstelle umfasst.

8. Verfahren nach Anspruch 7, bei dem das Bestimmen (E110) der Leserichtung (S) das Zeichnen, durch den Benutzer und innerhalb der grafischen Komponente, eines Strichs umfasst, dessen Anfang und Ende die Oberseite und die Unterseite der Anzeige definieren.

9. Verfahren nach Anspruch 1, umfassend einen Schritt des Anzeigens (E116, E120, E124) der erstellten grafischen Komponente (30, 30') und eines Auswahlmenüs (32, 32') zur Auswahl zwischen mindestens zwei Anwendungsfunktionen (34, 34') und einen Schritt des Auswählens (E126) einer Anwendungsfunktion, so dass diese ausgewählte Anwendungsfunktion der erstellten grafischen Komponente zugeordnet wird.

10. Verfahren nach dem vorhergehenden Anspruch, wobei das Auswahlmenü (32, 32') innerhalb der erstellten grafischen Komponente (30, 30') angezeigt wird.

11. Verfahren nach Anspruch 9, bei dem das Auswahlmenü (32, 32') von der für die erstellte grafische Komponente bestimmten Leserichtung abhängig ist.

12. Verfahren nach Anspruch 1, bei dem der Bildschirm in mehrere Bereiche unterteilt ist, von denen jeder einer Gruppe möglicher Anwendungen zugeordnet ist, so dass die Stelle auf dem Bildschirm, an der die grafische Form (31, 31') gezeichnet wird, die Gruppe von Anwendungen bestimmt, die gestartet werden können.

13. System (50) zur Verwaltung einer grafischen Benutzeroberfläche (10), die auf dem Touchscreen einer für mehrere Nutzer zugänglichen Einrichtung angezeigt wird, wobei die Schnittstelle dazu eingerichtet ist, grafische Anwendungskomponenten (26, 40, 40') zu umfassen, wobei eine grafische Anwendungskomponente eine zugeordnete Anwendungsfunktion anzeigt, wobei das System umfasst:
- eine Einrichtung zum Erfassen und Anzeigen (55, 56) einer grafischen Form (31, 31'), die von einem Benutzer auf der grafischen Benutzerschnittstelle gezeichnet wird, so dass eine grafische Komponente (30, 30') erstellt wird, deren Form, Position, Ausrichtung und Abmessungen ausgehend von der grafischen Form (31, 31') bestimmt werden, und
- ein Mittel zum Zuordnen einer Computeranwendungsfunktion zu der so erstellten grafischen Komponente, um sie der Anzeige der Anwendungsfunktion in einem Anwendungsfenster (40, 40') zuzuweisen, wobei das System **dadurch gekennzeichnet ist, dass** es ferner ein Computermittel umfasst, das so ausgestaltet ist, dass es eine Leserichtung (S) der erstellten grafischen Komponente bestimmt, wobei die Leserichtung (S) von einer Position eines Benutzers um den Bildschirm herum abhängig ist, so dass bestimmte Anwendungsfunktionen in Abhängigkeit von der Position des Benutzers erlaubt oder verboten sind, wobei die Position relativ zu einer Seite des Bildschirms bestimmt wird, und dass es das Anzeigen der Daten der Anwendungsfunktion in der grafischen Komponente entsprechend dieser bestimmten Leserichtung (S) steuert.

14. Mittel zum Speichern von Informationen, umfassend Anweisungen für ein Computerprogramm, das geeignet ist, das Verwaltungsverfahren nach einem der Ansprüche 1 bis 12 umzusetzen, wenn dieses Programm von dem System nach Anspruch 13 geladen und ausgeführt wird.

15. Computerprogrammprodukt, das von einem Mikroprozessor lesbar ist, umfassend Anweisungen zur Umsetzung des Verwaltungsverfahrens nach einem der Ansprüche 1 bis 12, wenn dieses Programm von dem Mikroprozessor von dem System nach Anspruch 13 geladen und ausgeführt wird.

## Claims

1. Method for managing a graphical user interface (10) displayed on the touchscreen of a device that can be accessed by several users, said interface being arranged to comprise graphical application components (26, 40, 40'), a graphical application component displaying an associated application function, the method comprising the steps of:
- tracing (E102), on the interface, a graphic form (31, 31'),
- creating a graphical component (30, 30'), the form, the location, the orientation and the dimensions of which are determined from said graphical form (31, 31'),
- associating (E128) an application function with said created graphical component to assign the graphical component to the display of said application function in an application window (40, 40'),
**characterized in that** it further comprises a step of determination (E110) of a reading direction (S) of the created graphical component, said reading direction (S) being dependent on a location of a user around the screen, such that certain application functions are authorized or prohibited as a function of the location of the user, said location being determined relative to a side of the screen, and so as to display, in the graphical component, data of the associated application function according to said determined reading direction.

2. Method according to Claim 1, comprising a step of recognition (E104) of a model graphical form (R) from the trace (31, 31') and a step of display (E116) of said model graphical form (30) instead of the traced form.

3. Method according to the preceding claim, wherein said tracing step (E102) comprises the tracing of a graphical shortcut.

4. Method according to Claim 1, wherein said determination (E110) of the reading direction (S) is automatic as a function of said trace (31, 31').

5. Method according to Claim 4, wherein the direction of the graphical component is defined by the line given between the first traced point and a centre of the traced graphical form.

6. Method according to Claim 4, wherein, for a traced graphical form of rectangle type, the direction of the graphical component is defined by the direction of the first side traced.

7. Method according to Claim 1, wherein said determination (E110) of the reading direction (S) comprises, in addition to the tracing of the graphical form, the indication by the user on the graphical interface of said reading direction.

8. Method according to Claim 7, wherein said determination (E110) of the reading direction (S) comprises the tracing, by the user and within the graphical component of a line whose starting end and finishing end relatively define the top and the bottom of the display.

9. Method according to Claim 1, comprising a step of display (E116, E120, E124) of said created graphical component (30, 30') and of a selection menu (32, 32') between at least two application functions (34, 34'), and a step of selection (E126) of one said application function so as to associate said selected application function with the created graphical component.

10. Method according to the preceding claim, wherein said selection menu (32, 32') is displayed within said created graphical component (30, 30').

11. Method according to Claim 9, wherein the selection menu (32, 32') is a function of said reading direction determined for the created graphical component.

12. Method according to Claim 1, wherein the screen is divided into several zones, each being associated with a set of possible applications, such that the position on the screen where the graphical form (31, 31') is traced determines the set of applications that can be launched.

13. System (50) for managing a graphical user interface (10) displayed on the touchscreen of a device that can be accessed by several users, said interface being arranged to comprise graphical application components (26, 40, 40'), graphical application component displaying an associated application function, the system comprising:
- a device (55, 56) for acquiring and displaying a graphical form (31, 31') traced by a user on the graphical user interface so as to create a graphical component (30, 30'), the form, the location, the orientation and the dimensions of which are determined from said graphical form (31, 31'), and
- a means for associating a computer application function with said duly created graphical component to assign it to the display of said application function in an application window (40, 40'), the system being **characterized in that** it further comprises a computer means configured to determine a reading direction (S) of the created graphical component, said reading direction (S) being dependent on a location of a user around the screen, such that certain application functions are authorized or prohibited as a function of the location of the user, said location being determined relative to a side of the screen, and to control the display of the data of the application function in the graphical component according to said determined reading direction (S) .

14. Information storage means comprising instructions for a computer program suitable for implementing the management method according to any one of Claims 1 to 12, when this program is loaded and run by the system according to Claim 13.

15. Computer program product that can be read by a microprocessor, comprising instructions for the implementation of the management method according to any one of Claims 1 to 12, when this program is loaded and run by the microprocessor by the system according to Claim 13.
